# EUROPÄISCHE PATENTSCHRIFT

(11) **EP 3 544 160 B1**
(45) Veröffentlichungstag und Bekanntmachung des Hinweises auf die Patenterteilung: **08.04.2020**
(21) Anmeldenummer: 18163016.1
(22) Anmeldetag: 21.03.2018
(51) Int. Cl.: H02K 15/04

(54) **TRANSPORTSYSTEM FÜR WELLENWICKELMATTEN**
TRANSPORT SYSTEM FOR WAVE ROLL MATS
SYSTÈME DE TRANSPORT POUR NATTES À ENROULEMENT ONDULÉ

(43) Veröffentlichungstag der Anmeldung: 25.09.2019
(73) Patentinhaber: Aumann Espelkamp GmbH, 32339 Espelkamp (DE)
(72) Erfinder: Lüttge, Wolfgang, 31787 Hameln (DE); Hermann, Reinhard, 32351 Stemwede (DE)
(74) Vertreter: Schober, Mirko

(56) Entgegenhaltungen:
- US-A- 4 246 694
- US-A1- 2009 001 841
- US-A1- 2009 276 997
- US-A1- 2010 000 077

## Beschreibung

Die Erfindung betrifft ein Transportsystem für Wellenwickelmatten nach dem Oberbegriff des Anspruchs 1.

In US 4,246,694 A wird die Wicklung eines Linearmotors offenbart, die einer Wellenwicklung ähnlich sieht. Zur Stabilisierung der Wicklung wird diese an den Wickelköpfen in Klammern gefasst, so dass die Wicklungen relativ zueinander fixiert werden und so zu Transport- und Lagerzwecken aufgerollt werden können. Ein offen liegender Transport der Wicklung ist nicht vorgesehen.

Bei Wickelverfahren, insbesondere bei der Herstellung von Wellenwicklungen, wird ein Wickeldraht oder eine Mehrzahl parallele Wickeldrähte aus Drahtauslassdüsen einem zu bewickelndem Formkern zugeführt. US 2009/001841 A1 offenbart ein derartiges Wickelverfahren, bei dem die Wickelmatte in einem Formteil gelagert zu einer Übertragungsvorrichtung transportiert wird. Dieses Formteil ist mit einem Raster ausgestattet, in dem die Stege der Wicklung angeordnet sind. US 2010/000077 A1 offenbart ebenfalls ein Transportsystem, bei dem die Stege an einer Gliederkette äquidistant gehalten werden. US 2009/ 276997 A1 offenbart den Transport von Wellenmatten, bei denen die Stege nahe den Wickelköpfen geklemmt und so festgehalten werden. Derartige Haltesysteme halten die Wickelmatten an vielen Stellen fest, so dass sie sicher Richtung Stator oder Rotor transportiert werden können. Nachteil solcher Haltesysteme ist, nur Wellenmatten mit einem bestimmten Stegabstand transportieren zu können und somit unflexibel zu sein.

Bei dem in EP 3 182 568 beschriebenen Verfahren wird eine Mehrzahl Wickeldrähte dem rotierenden Formkern einer Wickeleinrichtung zugeführt. Mittels Greifern wird der auf dem Formkern befindliche Draht gegriffen und zur Herstellung der Wickelköpfe der Wellenwicklung in einer Vorschubrichtung bewegt. Dabei werden auf dem Formkern Wellenwicklungen gebildet und daraus wird eine Wellenwickelmatte erzeugt. Mit der bekannten Vorrichtung lassen sich Wickelmatten in beliebiger Länge mit relativ kleinem Formkern formen.

Nun muss eine so hergestellte fertige Wellenwickelmatte im Prozess weiter transportiert werden. Dazu dient eine Transportvorrichtung, die die Wellenwickelmatte in einer Transportrichtung vorschiebt. Jede Wellenwicklung hat einen Anfang und ein Ende, da sie aus Drähten besteht, die ihrerseits wiederum Drahtenden aufweisen. Je nach späterem Verwendungszweck müssen die Drahtenden eine bestimmte Mindestlänge aufweisen, damit sie im späteren Anwendungsfall, zum Beispiel als Bestandteil des Stators einer elektrischen Maschine, ordnungsgemäß kontaktiert werden können. Bekannte Transporteinrichtungen weisen den Nachteil auf, dass die entsprechenden Drahtenden der Wellenwicklungen kurz gehalten werden müssen, weil sie sonst in der Transporteinrichtung nicht ordnungsgemäß geführt werden können. Dies liegt daran, dass eine auf einer Transporteinrichtung liegende Wellenwickelmatte von einigen Metern Länge unbedingt seitlich und auch in vertikaler Richtung geführt werden muss, da die Wellenwickelmatte sonst beim Vorschub quer zur Transportrichtung ausbrechen oder sich senkrecht zur Transportrichtung aufbäumen würde.

Wenn allerdings Drahtenden einer bestimmten Länge existieren, so stehen diese zwangsläufig an wenigstens einer Seite der Wellenwickelmatte seitlich heraus oder nach oben ab. Dies gestaltet die horizontale als auch vertikale Führung auf der Seite der Wellenwickelmatte mit den herausstehenden Drahtenden schwierig.

Aufgabe der vorliegenden Erfindung ist es daher, ein Transportsystem für Wellenwickelmatten zur Verfügung zu stellen, bei der die geschilderten Nachteile nicht auftreten und die Führung einer Wellenwickelmatte mit beliebigen Längen der Drahtenden problemlos möglich ist.

Gelöst wird diese Aufgabe durch ein Transportsystem für Wellenwickelmatten mit den Merkmalen des Anspruchs 1. Vorteilhafte Ausführungsformen finden sich in den abhängigen Ansprüchen.

Das erfindungsgemäße Transportsystem für Wellenwickelmatten weist eine Transportauflage auf, auf der eine Wellenwickelmatte abgelegt und in einer Transportrichtung transportiert werden kann. Weiter befinden sich zu beiden Seiten der Transportauflage daran angrenzende, entlang der Transportrichtung sich erstreckende Wellenwickelmattenführungen, die ein seitliches bzw. horizontales oder in vertikaler Richtung stattfindendes Ausbrechen der Wellenwickelmatte beim Transport entlang der Transportrichtung verhindern. Dabei ist nun erfindungsgemäß vorgesehen, dass wenigstens eine erste der Wellenwickelmattenführungen eine sich in Transportrichtung entlang der Wellenwickelmattenführung erstreckende permanent offene oder wenigstens abschnittweise zu öffnende Durchführungsöffnung aufweist, die zur Durchführung von an der Wellenwickelmatte vorhandenen Drahtendabschnitten ausgebildet ist. Natürlich können auch beide Wellenwickelmattenführungen eine entsprechende Öffnung aufweisen. Dies kann sich beispielsweise anbieten, wenn die Wellenwickelmatte zu beiden Seiten abstehende Drahtenden aufweisen sollte.

Die Wellenwickelmattenführungen und/oder die Transportauflage oder jedenfalls eine der Wellenwickelmattenführungen bzw. der Teil einer Wellenwickelmattenführung bzw. Transportauflage, die beim Führen der Wellenwickelmatte mit dem Draht derselben in Kontakt kommt, können bzw. kann aus einem Material gebildet werden, welches für den Kontakt mit der Wellenwickelmatte besonders geeignet ist. Hier bieten sich insbesondere Kunststoffe oder andere Materialien mit guten Gleiteigenschaften an. Als Material, bevorzugt ein Kunststoff, eignet sich insbesondere eines, welches eine Shore D Härte im Bereich von 40 bis 85 und/oder einen Reibbeiwert im Bereich von 0,3 bis 0,85 bezogen auf das Reibpaar aufweist, welches durch das Material der Wellenwickelmattenführung und/oder der Transportauflage einerseits sowie das für die Wellenwickelmatte verwendeten Drahtes andererseits gebildet wird. Bevorzugt ist der Draht dabei mit einem Isolationslack auf Basis von Polyamidimid, insbesondere mit Gleitmittel, versehen.

Nach einer bevorzugten Ausführungsform der vorliegenden Erfindung ist vorgesehen, dass wenigstens die erste Wellenwickelmattenführung einen ersten sich in Transportrichtung erstreckenden Führungsabschnitt und einen parallel dazu angeordneten zweiten sich in Transportrichtung erstreckenden Führungsabschnitt aufweist. Dabei kann insbesondere vorgesehen sein, dass die permanent offene oder wenigstens abschnittweise zu öffnende Durchführungsöffnung zwischen dem ersten Führungsabschnitt und dem zweiten Führungsabschnitt ausgebildet oder ausbildbar ist. Ausbildbar meint in diesem Zusammenhang, dass die Öffnung nicht permanent vorhanden sein muss. Entweder kann die Öffnung durch eine Maschinensteuerung abschnittweise erzeugt werden oder - wie weiter unten beschrieben - beispielsweise auch durch das Auseinanderdrücken durch die Drahtenden der vorgeschobenen Wellenwickelmatte selbst.

Eine bevorzugte Ausführungsform sieht vor, dass die Durchführungsöffnung die Gestalt eines wellenförmigen Spaltes aufweist. Bei dieser Ausgestaltung reichen die Drahtenden während des kompletten Transportprozesses durch den wellenförmigen Spalt hindurch und bewegen sich in einer Wellenbewegung auf und ab. Auf diese Weise werden zwar die Drahtenden periodisch angehoben und abgesenkt, allerdings wird gleichzeitig dafür gesorgt, dass in anderen Bereichen immer abschnittweise eine seitliche Führung der übrigen Wellenwickelmatte erfolgt.

Bevorzugt ist dabei vorgesehen, dass der erste Führungsabschnitt und der zweite Führungsabschnitt aufeinander zu weisende Stirnseiten aufweisen, die jeweils einen wellenförmigen Verlauf aufweisen und insbesondere komplementär zueinander geformt sind. Bei dieser Ausgestaltung wird zur Durchführung der Drahtenden jeweils ein konstanter wellenförmiger Spalt erzeugt; so kann verhindert werden, dass die Wellenwickelmatte auf der Seite des Spaltes aus der Transportrichtung ausbricht.

Besonders vorteilhaft ist es, wenn der erste Führungsabschnitt zum zweiten Führungsabschnitt hin weisende Wellenberge aufweist, die so ausgebildet sind, dass ihr Scheitelpunkt oberhalb der durch die Transportauflage definierten Ebene liegt. Auf diese Weise steht zumindest der erste Führungsabschnitt immer ein Stück weit - bevorzugt etwa die halbe Dicke der Wellenwickelmatte - über die Transportauflage hinaus, sodass im Bereich von dessen Wellenbergen stets eine seitliche Anlage für die Wellenwickelmatte geschaffen wird.

Alternativ oder ergänzend hierzu kann nach einer besonderen Ausführungsform der vorliegenden Erfindung vorgesehen sein, dass die Durchführungsöffnung durch wenigstens ein an dem ersten Führungsabschnitt und/oder dem zweiten Führungsabschnitt angeordnetes flexibles Element verschlossen ist. Auf diese Weise wird erreicht, dass eine Anlage der seitlichen Führung an die transportierte Wellenwickelmatte lediglich in den Bereichen "unterbrochen" wird, in denen sich die Drahtenden befinden. Da dies im Regelfall gegenüber der kompletten Längserstreckung in Transportrichtung der Wellenwickelmatte nur kleine Bereiche sind, liegt die Führung in den übrigen Bereichen immer an der Wellenwickelmatte an. Hierfür sorgt insbesondere die elastische Rückstellwirkung des flexiblen Elements.

Als vorteilhaft hat sich eine Ausführungsform herausgestellt, bei der das wenigstens eine flexible Element nach Art einer elastischen Lippe ausgebildet ist. Eine solche elastische Lippe ist als Strangprofil in nahezu beliebiger Länge im Exekutionsverfahren herstellbar und stellt daher eine relativ simpele aber effektive Lösung dar.

Nach einer besonders bevorzugten Ausführungsform ist vorgesehen, dass jeder Führungsabschnitt jeweils wenigstens ein flexibles Element aufweist, wobei die flexiblen Elemente aufeinander zu gerichtete freie Schmalseiten aufweisen. Bevorzugt ist dabei vorgesehen, dass die aufeinander zu gerichteten bzw. aufeinander zu weisenden Schmalseiten der flexiblen Elemente sich entlang einer Berührungslinie berühren oder zwischen ihnen einen kleinen Spalt ausbilden. Durch das Penetrieren der Drahtenden werden die beiden flexiblen, elastischen Elemente immer dort unter Ausbildung einer Vorspannung auseinandergedrückt, wo sich während des Transportvorgangs gerade die Drahtenden befinden. An den übrigen Stellen schließt sich infolge der Eigenspannung der flexiblen Elemente die Öffnung wieder und bildet an diesen Stellen die Anlage zur seitlichen Führung der Wellenwickelmatte.

Dabei kann die Berührungslinie oder der Spalt geringfügig, insbesondere etwa eine halbe Dicke einer Wellenwickelmatte, oberhalb der durch die Transportauflage definierten Ebene liegen. So wird sichergestellt, dass auch bei Auseinanderdrücken der flexiblen Elemente lediglich die Drahtenden durch die so gebildete Öffnung hindurch treten können und die Wellenwickelmatte eben gerade nicht.

Eine bevorzugte Konfiguration sieht vor, dass das wenigstens eine flexible Element oder die flexiblen Elemente zur Transportauflage hin schräg angestellt sind, so dass die freie Schmalseite des flexiblen Elements oder der flexiblen Elemente eine seitliche Führung der Wellenwickelmatte bildet. Aufgrund der Schrägstellung in Richtung der Wellenwickelmatte wird effektiv vermieden, dass außer den Drahtenden andere Teile der Wellenwickelmatte Gefahr laufen, die flexiblen Elemente auseinander zu drücken.

Die Erfindung wird nachfolgend anhand der Figuren 1 bis 6 näher erläutert.
- Figur 1: - zeigt eine Draufsicht auf einen Teil eines erfindungsgemäßen Transportsystems gemäß einer ersten Ausführungsform,
- Figur 2: - zeigt eine perspektivische Ansicht des in Figur 1 gezeigten Ausschnitts des erfindungsgemäßen Transportsystems,
- Figur 3: - zeigt eine Schnittansicht der Draufsicht aus Figur 1,
- Figur 4: - zeigt eine Draufsicht auf einen Teil eines erfindungsgemäßen Transportsystems gemäß einer zweiten Ausführungsform,
- Figur 5: - zeigt eine perspektivische Ansicht des in Figur 4 gezeigten Ausschnitts des erfindungsgemäßen Transportsystems,
- Figur 6: - zeigt eine Schnittansicht der Draufsicht aus Figur 4.

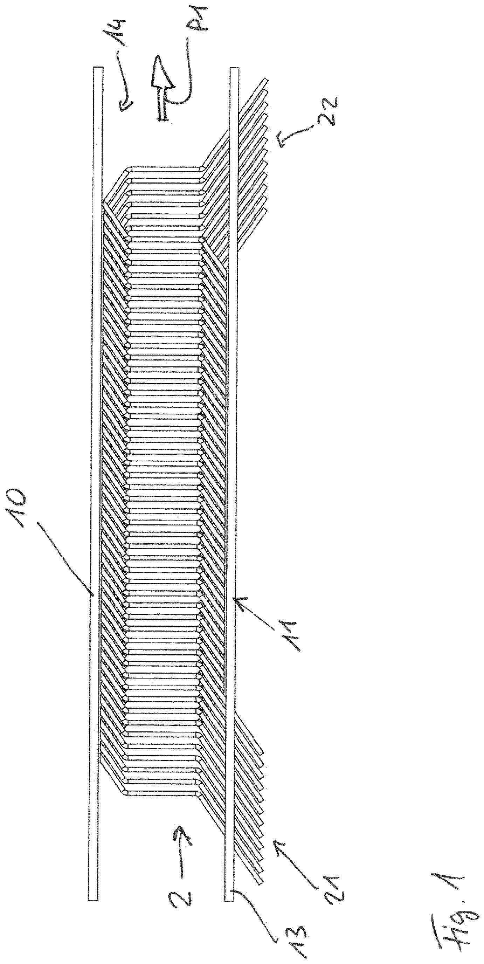

Die in den Figuren 1 - 3 gezeigte Ausführungsform des erfindungsgemäßen Transportsystems 1 weist eine mit 14 gekennzeichnete Transportauflage auf, auf welcher eine Wellenwickelmatte 2 aufliegt und in Transportrichtung P1 - der Hauptlängserstreckungsrichtung der Wellenwickelmatte 2 - vorgeschoben wird. An den beiden Längsseiten parallel zur Transportrichtung P1 sind Wellenwickelmattenführungen 10 und 11 (im Folgenden kurz "Führungen" genannt) gezeigt. Die Wellenwickelmatte 2 weist Drahtenden 21, 22 auf, welche seitlich über die eine Führung 11 hinausragen. Dazu weist die in den Abbildungen der Figuren 1 - 3 gezeigte Führung 11 eine entsprechend ausgebildete Öffnung 16 auf.

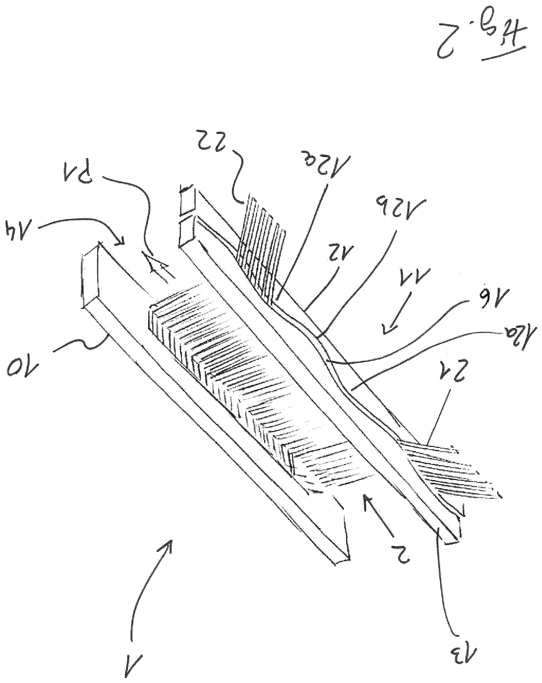

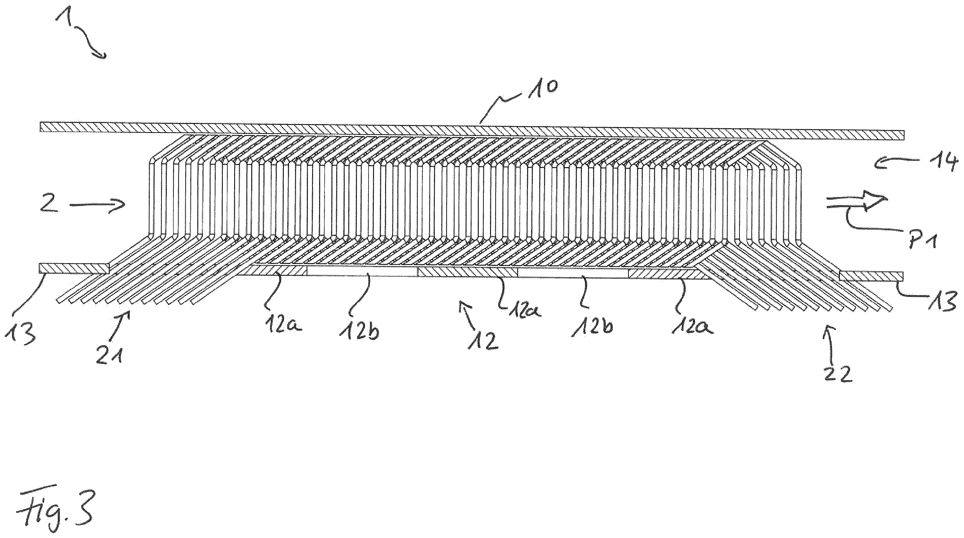

Dies lässt sich insbesondere in Figur 2 und Figur 3 erkennen. Die seitliche Führung 11 ist danach durch zwei Teile 12, 13 gebildet. Der untere Teil 12 und der obere Teil 13 sind an ihren aufeinander zu weisenden Schmalseiten wellenförmig ausgebildet, und bilden so einen wellenförmigen Spalt 16. Durch diesen Spalt 16 ragen die Enden 21 bzw. 22 der entlang der Transportrichtung P1 geförderten Wellenwickelmatte 2 heraus. Dabei geschieht folgendes:
Die Drahtenden werden in den Bereichen der Wellenberge 12a des unteren Führungsabschnitts 12 angehoben und im Bereich der Wellentäler 12b abgesenkt. Die Wellenberge 12a sind dabei relativ zur Transportauflage 14 so ausgebildet, dass ihre Scheitelpunkte oberhalb der Ebene der Transportauflage 14 liegen. Das bedeutet, dass in den Bereichen der Wellenberge 12a die nicht die Drahtenden 21, 22 aufweisenden Bereiche der Wellenwickelmatte 2 immer eine seitliche Anlage erfahren. Auf diese Weise ist also sichergestellt, dass es immer irgendwelche Bereiche der Wellenwickelmatte 2 gibt, die sich an der seitlichen Führung 11 abstützen können. Die Periodizität des wellenförmigen Spaltes sollte daher so gewählt sein, dass möglichst eine Mehrzahl Wellenberge 12a entlang der Längserstreckung der Wellenwickelmatte 2 zwischen den Drahtenden 21 und 22 Platz findet.

Natürlich ist es auch vorstellbar, dass die Drahtenden 21, 22 der Wellenwickelmatte 2 nicht nur zu einer Seite abstehen (wie in den Figuren 1 - 3 gezeigt), sondern auch zur gegenüberliegenden Seite abstehen. In diesem Fall wäre dann auch die Führung 10 so auszubilden wie etwa die Führung 11 im gezeigten Beispiel.

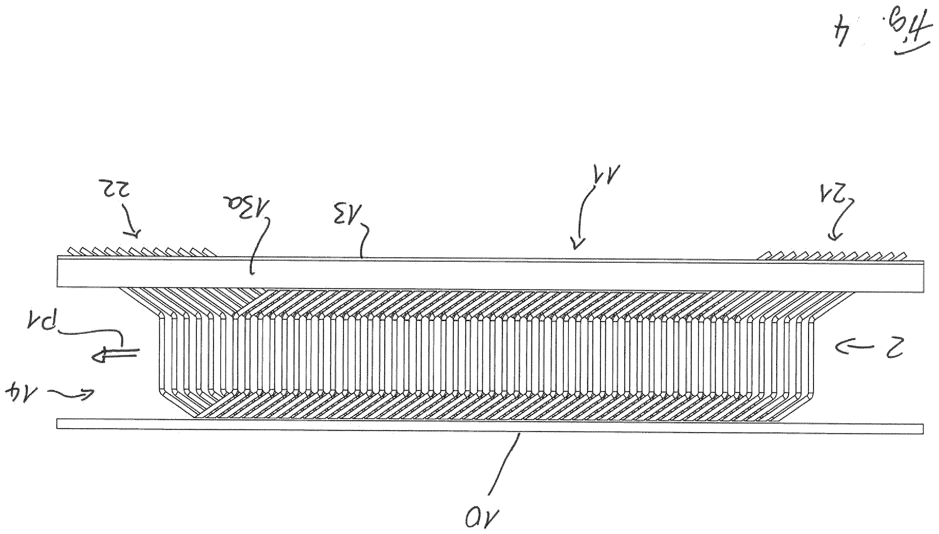

Eine weitere Ausführungsform der vorliegenden Erfindung ist in den Figuren 4 - 6 dargestellt. Mit gleichen Bezugszeichen versehene Elemente entsprechen mit Ausnahme von 12a denjenigen, die zuvor mit Bezug auf die Figuren 1 - 3 beschrieben worden sind. Zur Vermeidung von Wiederholungen wird deshalb auch auf die obigen Ausführungen Bezug genommen. Dies gilt insbesondere deshalb, weil sich auch das Ausführungsbeispiel aus den Figuren 1 - 3 hinsichtlich der Ausbildung der seitlichen Führung mit dem Ausführungsbeispiel der Figuren 4 - 6 kombinieren lässt. Dies kann etwa dergestalt erfolgen, dass eine der Führungen 11 so ausgebildet ist, wie dies in den Figuren 1 - 3 gezeigt ist, während eine weitere der Führungen so ausgebildet sein kann, wie es in den Figuren 4 - 6 gezeigt ist. Auch ist vorstellbar, dass eine lediglich auf einer Seite vorgesehene Führung teilweise durch eine Ausführungsform gemäß den Figuren 1 - 3 und teilweise durch eine Ausführungsform gemäß den Figuren 4 - 6 gebildet wird. Dies kann etwa durch Hintereinanderschalten verschiedener Führungsabschnitte geschehen.

Im Folgenden wird vorrangig auf die in den Figuren 4 - 6 dargestellte Ausführung der Führung 11 Bezug genommen. Die Führung 11 in den Figuren 4 - 6 weist wiederum einen oberen Abschnitt 13 und einen unteren Abschnitt 12 auf. Im Unterschied zum Ausführungsbeispiel gemäß der Figuren 1 - 3 weist die Führung 11 jedoch keinen permanenten wellenförmigen Spalt auf, sondern eine Öffnung, welche zunächst einmal durch vom oberen Abschnitt 13 und vom unteren Abschnitt 12 ausgehende Lippen 13a bzw. 12a verschlossen ist. Die bevorzugt wie im gezeigten Beispiel zur Transportauflage 14 hin schräg angestellten Lippen 13a bzw. 12a liegen mit ihren freien Enden bevorzugt aufeinander, wobei sie auch geringfügig voneinander beabstandet unter Ausbildung eines geraden Spaltes positioniert sein können.

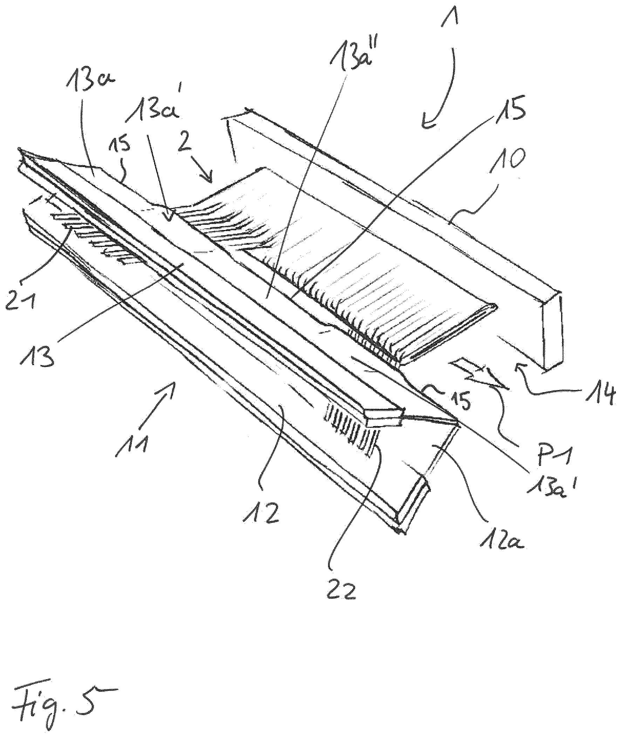

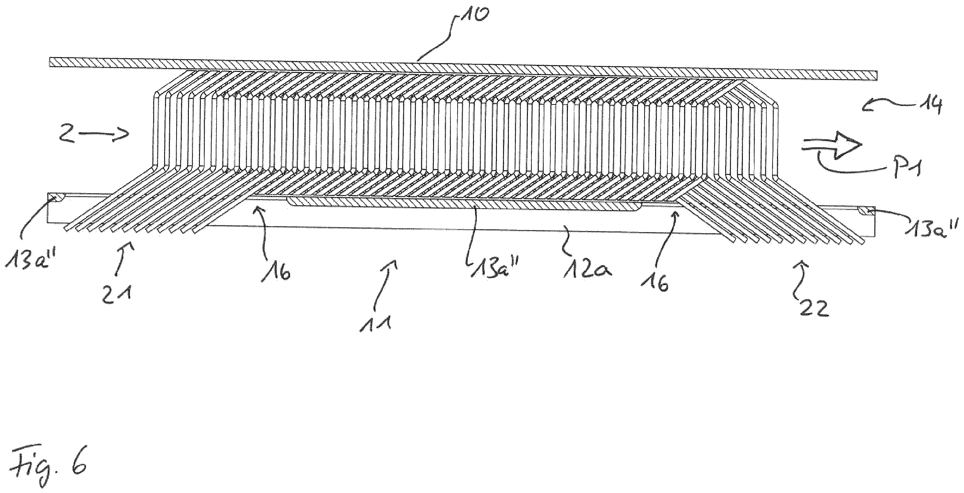

Wie man insbesondere in Figur 5 erkennt, werden die flexiblen Elemente 13a bzw. 12a beim Vorschub der Wellenwickelmatte 2 in Transportrichtung P1 an den Stellen gespreizt oder auseinandergedrückt, an denen sich momentan die Drahtenden 21 bzw. 22 befinden. Dort bilden sich dann (vorübergehend) Öffnungen 16 (vergleiche Figur 6) aus, durch welche die Drahtenden 21 bzw. 22 durch die Führung 11 hindurch treten können. Die Bereiche, in denen die Drahtenden 21 bzw. 22 durchtreten, sind in der Figur 5 durch die erhöhten Bereiche 13a' und demgegenüber flache Bereiche 13a" dargestellt. In den übrigen Bereichen 13a" liegen die beiden Enden der jeweiligen flexiblen, elastischen Elemente 13a und 12a aufeinander und bilden in diesen Bereichen eine seitliche Führung 15 für die Wellenwickelmatte 2 aus. Bevorzugt ist daher dieser Bereich 15 geringfügig oberhalb der durch die Transportauflage 14 definierten Ebene angeordnet, bevorzugt etwa auf halber Dickenhöhe der Wellenwickelmatte 2. Die genannten Bereiche 13a' und 13a" "wandern" also mit weiterem Vorschub der Wellenwickelmatte 2 in Transportrichtung P1 mit den Drahtenden 21. 22 mit.

Mit dem erfindungsgemäßen Transportsystem 1 lassen sich beliebig lange Wellenwickelmatten 2 mit beliebig langen Drahtenden 21, 22 sehr komfortabel und ohne die Gefahr des seitlichen Ausbrechens entlang einer Förderstrecke in einer Vorschubrichtung P1 transportieren. Um eine Beschädigung des verwendeten Drahtes der Wellenwickelmatte 2 weitgehend auszuschließen, können die Führungen 11, 10 sowie die Transportauflage 14 bevorzugt aus einem Material gefertigt sein, welches in Bezug auf den verwendeten lackierten Draht der Wellenwickelmatte 2 gute Gleiteigenschaften aufweist. Dies kann durch spezielle Einstellung des Reibbeiwertes für das hier zu betrachtende System als auch durch geeignete Einstellung der Härte des für die Führungen oder die Transportauflage 14 verwendeten Materials erreicht werden. Für das System Lackdraht/Führung bzw. Lackdraht/Transportauflage haben sich Reibbeiwerte im Bereich von 0,3 bis 0,85 als geeignet herausgestellt. Das Bevorzugte Material für die Führungen und/oder die Transportauflage ist Kunststoff. Die bevorzugte Härte des verwendeten Materials für die Führung und/oder Transportauflage liegt im Bereich von 40 und 85 (Shore D).

## Patentansprüche

1. Transportsystem (1) für Wellenwickelmatten (2), aufweisend eine Transportauflage (14), auf der eine Wellenwickelmatte (2) abgelegt und in einer Transportrichtung (P1) transportiert werden kann, sowie sich entlang der Transportrichtung (P1) erstreckende, zu beiden Seiten an die Transportauflage (14) angrenzende seitliche Wellenwickelmattenführungen (10, 11), die ein seitliches Ausbrechen der Wellenwickelmatte (2) beim Transport entlang der Transportrichtung (P1) verhindern,
**dadurch gekennzeichnet,**
**dass** wenigstens eine erste (11) der Wellenwickelmattenführungen eine sich in Transportrichtung (P1) entlang der Wellenwickelmattenführung (11) erstreckende permanent offene oder wenigstens abschnittweise zu öffnende Durchführungsöffnung (16, 13a') zur Durchführung von an der Wellenwickelmatte (2) vorhandenen Drahtendabschnitten (21, 22) aufweist.

2. Transportsystem (1) nach Anspruch 1,
**dadurch gekennzeichnet,**
**dass** die erste Wellenwickelmattenführung (11) einen ersten in Transportrichtung (P1) sich erstreckenden Führungsabschnitt (12) und einen parallel dazu angeordneten zweiten in Transportrichtung (P1) sich erstreckenden Führungsabschnitt (13) aufweist.

3. Transportsystem nach Anspruch 2,
**dadurch gekennzeichnet,**
**dass** die permanent offene oder wenigstens abschnittweise zu öffnende Durchführungsöffnung (16, 13a') zwischen dem ersten Führungsabschnitt (12) und dem zweiten Führungsabschnitt (12) ausgebildet oder ausbildbar ist.

4. Transportsystem nach Anspruch 3,
**dadurch gekennzeichnet,**
**dass** die Durchführungsöffnung (16) die Gestalt eines wellenförmigen Spaltes (16) aufweist.

5. Transportsystem nach Anspruch 4,
**dadurch gekennzeichnet,**
**dass** der erste Führungsabschnitt (12) und der zweite Führungsabschnitt (13) aufeinander zu weisende Stirnseiten aufweisen, die jeweils einen wellenförmigen Verlauf aufweisen und insbesondere komplementär zueinander geformt sind.

6. Transportsystem nach Anspruch 5,
**dadurch gekennzeichnet,**
**dass** der erste Führungsabschnitt (12) zum zweiten Führungsabschnitt (13) hin weisende Wellenberge (12a) aufweist, die so ausgebildet sind, dass ihr Scheitelpunkt oberhalb der durch die Transportauflage (14) definierten Ebene liegt.

7. Transportsystem (1) nach Anspruch 3,
**dadurch gekennzeichnet,**
**dass** die Durchführungsöffnung (13a') durch wenigstens ein an dem ersten Führungsabschnitt (12) und/oder dem zweiten Führungsabschnitt (13) angeordnetes flexibles Element (12a, 13a) verschlossen ist.

8. Transportsystem (1) nach Anspruch 7,
**dadurch gekennzeichnet,**
**dass** das wenigstens eine flexible Element (12a, 13a) nach Art einer elastischen Lippe ausgebildet ist.

9. Transportsystem (1) nach Anspruch 7 oder 8,
**dadurch gekennzeichnet,**
**dass** jeder Führungsabschnitt (12, 13) jeweils wenigstens ein flexibles Element (12a, 13a) aufweist, wobei die flexiblen Elemente (12a, 13a) aufeinander zu gerichtete freie Schmalseiten aufweisen.

10. Transportsystem (1) nach Anspruch 9,
**dadurch gekennzeichnet,**
**dass** die aufeinander zu gerichteten Schmalseiten der flexiblen Elemente (12a, 13a) sich entlang einer Berührungslinie berühren oder zwischen ihnen einen kleinen Spalt ausbilden.

11. Transportsystem (1) nach Anspruch 10,
**dadurch gekennzeichnet,**
**dass** die Berührungslinie oder der Spalt geringfügig, insbesondere etwa eine halbe Dicke einer Wellenwickelmatte (2), oberhalb der durch die Transportauflage (14) definierten Ebene liegt.

12. Transportsystem (1) nach einem der Ansprüche 7 bis 11,
**dadurch gekennzeichnet,**
**dass** das wenigstens eine flexible Element (12a, 13a) oder die flexiblen Elemente nach einem der Ansprüche 9 bis 11, zur Transportauflage (14) hin schräg angestellt sind, so dass die freie Schmalseite des flexiblen Elements oder der flexiblen Elemente (12a, 13a) eine seitliche Führung (15) der Wellenwickelmatte (2) bildet.

## Claims

1. Transport system (1) for wave winding mats (2) having a transport support (14), on which a wave winding mat (2) can be placed and transported in a transport direction (P1), as well as having lateral wave winding mat guides (10, 11) which extend along the transport direction (P1), adjoin the transport support (14) on both sides and prevent the wave winding mat (2) from breaking out sideways during transport along the transport direction (P1),
**characterised in that**
at least a first (11) of the wave winding mat guides has a through opening (16, 13a') which extends in the transport direction along the wave winding mat guide (11) and is permanently open or is to open at least in some sections, for passing through the wire end sections (21, 22) which are present on the wave winding mat (2).

2. Transport system (1) according to claim 1
**characterised in that**
the first wave winding mat guide (11) has a first guide section (12) which extends in the transport direction (P1), and a second guide section (13) which is arranged parallel thereto and extends in the transport direction .

3. Transport system according to claim 2
**characterised in that**
the through opening (16, 13a') which is permanently open or opens in at least some sections is or can be formed between the first guide section (12) and the second guide section (12).

4. Transport system according to claim 3
**characterised in that**
the through opening (16) has the form of a wave-shaped gap (16).

5. Transport system according to claim 4
**characterised in that**
the first guide section (12) and the second guide section (13) have end sides which face one another and which each have a wave-shaped path and in particular are formed complementary with one another.

6. Transport system according to claim 5
**characterised in that**
the first guide section (12) has wave peaks (12a) facing towards the second guide section (13) and these are designed so that their apex point lies above the plane defined by the transport support (14).

7. Transport system (1) according to claim 3
**characterised in that**
the through opening (13a') is closed by at least one flexible element (12a, 13a) which is arranged on the first guide section (12) and/or on the second guide section (13).

8. Transport system (1) according to claim 7
**characterised in that**
the at least one flexible element (12a, 13a) is designed in the form of an elastic lip.

9. Transport system (1) according to claim 7 or 8
**characterised in that**
each guide section (12, 13) has at least one flexible element (12a, 13a) each wherein the flexible elements (12a, 13a) have free narrow sides directed towards one another.

10. Transport system (1) according to claim 9
**characterised in that**
the narrow sides of the flexible elements (12a, 13a) directed towards one another contact one another along a contact line or form a small gap between them.

11. Transport system () according to claim 10
**characterised in that**
the contact line or the gap lies slightly, in particular about half the thickness of a wave winding mat (2), above the plane defined by the transport support (14).

12. Transport system (1) according to one of claims 7 to 11
**characterised in that**
the at least one flexible element (12a, 13a) or the flexible elements according to one of claims 9 to 11 are set up inclined to the transport support (14) so that the free narrow side of the flexible element or of the flexible elements (12a, 13a) forms a lateral guide (15) for the wave winding mat (2).

## Revendications

1. Système de transport (1) pour nattes d'enroulement ondulé (2), présentant un support de transport (14), sur lequel une natte d'enroulement ondulé (2) est déposée et peut être transportée dans une direction de transport (Pl), ainsi que des guidages de nattes d'enroulement ondulé latéraux (10, 11), adjacents, des deux côtés, au support de transport (14), qui, s'étendant le long de la direction de transport (Pl), empêchent un dérapage des nattes d'enroulement ondulé (2) lors du transport le long de la direction de transport (Pl),
**caractérisé en ce que**
tout au moins l'un (11) des premiers guidages de nattes d'enroulement ondulé présente une ouverture de passage (16, 13a') ouverte en permanence ou pouvant être ouverte au moins par sections, laquelle s'étend dans la direction de transport (Pl), le long du guidage (11) de nattes d'enroulement ondulé pour le passage de sections finales (21, 22) de fils présents sur les nattes d'enroulement ondulé (2).

2. Système de transport (1) selon la revendication 1,
**caractérisé en ce que**
le premier guidage de nattes d'enroulement ondulé (11) présente une première partie de guidage (12) qui s'étend dans la direction de transport (Pl) et une deuxième partie de guidage (13) qui, s'étendant dans la direction de transport (Pl), est disposée parallèlement à celle-ci.

3. Système de transport selon la revendication 2,
**caractérisé en ce que**
l'ouverture de passage ouverte en permanence ou pouvant être ouverte au moins par sections (16, 13a') est formée ou peut être formée entre la première partie de guidage (12) et la deuxième partie de guidage (12).

4. Système de transport selon la revendication 3,
**caractérisé en ce que**
l'ouverture de passage (16) présente la forme d'une fente ondulée (16).

5. Système de transport selon la revendication 4,
**caractérisé en ce que**
la première partie de guidage (12) et la deuxième partie de guidage (13) présentent des parties latérales orientées les unes vers les autres, lesquelles présentent un tracé ondulé et sont en particulier de conception complémentaire les unes par rapport aux autres.

6. Système de transport selon la revendication 5,
**caractérisé en ce que**
la première partie de guidage (12) présente des élévations ondulées (12a), qui, orientées vers la deuxième partie de guidage (13), sont réalisées de manière à ce que leur point culminant soit situé au-dessus du plan défini par le support de transport (14).

7. Système de transport (1) selon la revendication 3,
**caractérisé en ce que**
l'ouverture de passage (13a') est fermée par au moins un élément flexible (12a, 13a), qui est disposé sur la première partie de guidage (12) et / ou sur la deuxième partie de guidage (13).

8. Système de transport (1) selon la revendication 7,
**caractérisé en ce que**
l'au moins un élément flexible (12a, 13a) est réalisé à la manière d'une lèvre élastique.

9. Système de transport (1) selon la revendication 7 ou 8,
**caractérisé en ce que**
chacune des parties de guidage (12, 13) présente au moins un élément flexible (12a, 13a), sachant que les éléments flexibles (12a, 13a) présentent des côtés étroits libres orientés les uns vers les autres.

10. Système de transport (1) selon la revendication 9,
**caractérisé en ce que**
les côtés étroits der éléments flexibles (12a, 13a) dirigés les uns vers les autres se touchent le long d'une ligne de contact ou qu'un petite fente se forme entre eux.

11. Système de transport (1) selon la revendication 10,
**caractérisé en ce que**
la ligne de contact ou la fente est située légèrement, en particulier de la moitié d'une épaisseur d'une natte d'enroulement ondulé (2), au-dessus du plan défini par le support de transport (14).

12. Système de transport (1) selon l'une des revendications 7 bis 11,
**caractérisé en ce que**
l'au moins un élément flexible (12a, 13a) ou les éléments flexibles selon l'une des revendications 9 bis 11, sont disposés obliquement par rapport au support de transport (14) de manière à ce que le côté étroit libre de l'élément flexible ou des éléments flexibles (12a, 13a) forme un guidage latéral (15) pour les nattes d'enroulement ondulé (2).
